# EUROPEAN PATENT APPLICATION

(11) **EP 2 556 754 A1**
(43) Date of publication of application: **13.02.2013**
(21) Application number: 11180551.1
(22) Date of filing: 08.09.2011
(51) Int. Cl.: A23L 1/31, A23L 1/315, A23L 1/325

(54) **Use of skin connective tissue material for the preparation of oil-containing food products**

(30) Priority: 10.08.2011 GR 20110100497
(71) Applicant: Domazakis, Konstantinos, 74100 Rethymnon (GR); Domazakis, Emmanouil, 74100 Rethymnon (GR)
(72) Inventor: Domazakis, Konstantinos, 74100 Rethymnon (GR); Domazakis, Emmanouil, 74100 Rethymnon (GR)
(74) Representative: Hess, Peter K. G.

(57) **Abstract**

The present invention refers to the use of a composition comprising skin connective tissue from meat-supplying animals, as carrier for the incorporation of oil into meat-based products. The composition can be prepared by a procedure comprising a heat processing step or by a procedure not comprising a heat processing step. The present invention further refers to a process for preparing a meat-based product, wherein the process comprises preparing a composition comprising skin connective tissue and oil, and adding said composition to a meat mass or meat paste to prepare the meat-based product.

## Description

The present invention relates to the use of skin connective tissue (SCT) material for the preparation of oil-containing food products, and in particular the use of skin connective tissue material as carrier for the incorporation of oil into meat-based products.

Vegetable oils have a better dietary profile than animal fat, and therefore are recommended as part of a healthier diet, in substitution of animal fat. Meat-based products containing vegetable oil are known and they can essentially be prepared by two different methods of incorporating the oil, namely the direct incorporation, i.e. by direct admixture of oil into the meat mass during the preparation of the latter, and the indirect incorporation, i.e. by pre-emulsifying oil before addition to the meat mass or by using a carrier medium. Examples of indirect oil incorporation into meat-based systems have been demonstrated by Dubanchet in US patent 5,238,701, by the works of Bloukas *et al.* (Meat Science, Vol.45, no 2, pp: 133-144, 1977; Meat Science, vol. 45, no. 2, pp: 223-238, 1997) and recently by EP-A-2 163 163. Dubanchet (US patent 5,238,701) teaches a process for making delicatessen meat products using vegetable oils. The process involves heating vegetable oil to at least 100 °C, incorporating milk proteins to obtain a homogenous mixture, followed by the addition of boiling water. Similarly, Bloukas et al. (Meat Science, Vol.45, no 2, pp: 133-144, 1977; Meat Science, vol. 45, no. 2, pp: 223-238, 1997) used pre-emulsified olive oil with soy protein isolate or sodium caseinate for the making of dry sausages and frankfurters, respectively. Finally, the EP-A-2 163 163 describes an oil composition comprising oil and broth, which composition allows stable oil incorporation into meat-based products and emulsion-type foodstuff products.

In the meat-processing industry it is known to use pork skin derivatives, e.g. gelatine. EP-A-o 325 315 and US 4,904,496 describe low-fat meat products comprising a continuous phase of heat-set emulsion and a discontinuous phase of particles of water and oil emulsion, comprising edible fat and an aqueous solution of a hydrocolloid, e.g. gelatine. The edible fat used is a fat compatible with the meat product produced and includes animal and vegetable fats.

Skin, for example pork skin, has been used in the meat processing industry, as meat extender. Pork skin accounts for the majority of skin applications. The porcine epidermis comprising the stratum germinativum, stratum granulosum and stratum corneum, has a varying thickness up to 100 µm in the various body parts. The distinct layer beneath, the dermis, consists of interlacing bands of fibrous tissue. Networks of elastic fibers are found throughout the dermis, while collagen is arranged in a three-dimensional network of fibres and fibre bundles, which cross each other in two main directions, passing rather obliquely between epidermis and subcutis. Smaller fibre bundles pass through the network in other directions resulting in a densely interwoven meshwork (Meyer W, Neurand K, Radke B; Journal of Anatomy 134, 139-148, 1982). In the subcutis, the adipocytes are deposited in pockets of elastic and collagenous tissue. Strands of connective tissue from the deeper reticular dermis extend throughout the subcutaneous fat layer, generally perpendicular to the surface of the skin (Marcarian HQ, Calhoun ML. American Journal of Veterinary Research 27, 765-772, 966).

It is an object of the present invention to enable a stable incorporation of edible oil, such as a vegetable oil, into meat-based products. This aim is accomplished by using skin connective tissue as carrier for the insertion of oil. In this way, the oil is incorporated into the meat-based products via an oil composition, which comprises the oil and skin connective tissue material.

Thus, the present invention refers to the use of a composition comprising skin connective tissue (here forth also as SCT) from meat-supplying animals, as carrier for the incorporation of oil into meat-based products. The composition can be prepared by a procedure comprising a heat processing step (here forth as heat treated oil composition), or by a procedure not comprising a heat processing step (here forth as non-heat treated oil composition). The invention also relates to a process for preparing a meat-based product, wherein the process comprises preparing a composition comprising skin connective tissue from meat-supplying animals and oil, and adding said composition to a meat mass or meat paste to prepare the meat-based product. The invention further relates to meat-based products obtainable by that process, and an oil composition obtainable by combining oil with skin connective tissue from meat-supplying animals. Preferred embodiments of the invention are described in the description hereinafter and the claims.

Within the context of the present invention, the term "oil", whenever used herein, comprises any edible oil fit for human consumption. Preferably, from a dietary point of view, the oil used according to the invention, is an edible vegetable oil, or a mixture thereof. Edible oils that can be used according to the present invention, without being restricted thereto, include: olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof. Many other kinds of oils that are used for cooking can, however, also be used, such as almond oil and avocado oil. The oils used according to the present invention are preferably liquid at a temperature between o-25°C and more preferably liquid between o-15°C, due to their high unsaturated fatty acid content. From the oils mentioned above, therefore, olive oil, sunflower oil, corn oil, soybean oil, canola oil and mixtures thereof are especially preferred, with olive oil being the most preferred oil. Preferably, the oil of the composition of the present invention is a virgin olive oil, more preferably an extra virgin olive oil. Moreover, it is preferred that the oil used in the oil composition of the present invention is an organic oil, i.e. oil produced according to organic farming standards, verified by accredited organisations.

According to an aspect of this invention the oil is used in substitution of animal fat, which is conventionally added during the preparation of meat-based products, either directly or via the use of muscular meat tissues of high fat content. Foodstuff containing vegetable oils, high in unsaturated fatty acids, in substitution of the added animal fat, are recommended as a part of a healthier diet, due to the higher unsaturated/saturated fat ratio of the oil compared to that of animal fat.

For the purpose of the present invention, the skin connective tissue, as used herein, is derived from skin of meat-supplying animals and it is preferably reduced in adipose tissue or more preferably low in adipose tissue. The skin connective tissue, as used herein, preferably contains less than 20% (w/w) fat and more preferably less than 15% (w/w) fat. The skin connective tissue (SCT) used according to the invention can be derived from porcine skin, skin of ruminants (e.g. veal), poultry, fish, or combinations thereof. Subject to and permissible by the law and regulations in a country, skin connective tissue from any other edible animal species may also be used. Preferably, the skin connective tissue material is derived from the pork skin, poultry skin and skin of ruminants. The skin connective tissue material used is prepared from skin pieces of the animals, such as a by-product of carcass processing.

An exemplary method for the preparation of SCT material from pork is the following: Pork carcass after bleeding, scalding, depilation, washing by high-pressure spraying, limbs removal at the carpus and removal of the head, it is eviscerated and split into two pieces in the length of the spinal cord. Then, the skin is excised in pieces, preferably in a way that a high percentage of the adipose tissue is not included. The resulting skin connective tissue (SCT) is then preferably cut in smaller pieces for easier handling and stored in chilling/freezing conditions, until further used.

In a preferred embodiment of the invention, the SCT material is processed by chopping and/or mixing, e.g. in a suitable chopping and mixing machine, such as a bowl chopper. The SCT may however be already grinded or comminuted prior to processing in the above chopping and mixing machine. Within the chopping and mixing machine, the processed skin connective tissue can be combined with a quantity of oil. In this preferred embodiment of the invention, the SCT or SCT-oil composition is defined as "non-heat treated". For the non-heat treated SCT or for the making of the non-heat treated SCT-oil composition, preferably a heat treatment is excluded.

In another preferred embodiment of the invention, the SCT material is first subjected to a heat treatment, prior to processing by chopping and/or mixing, e.g. in a suitable chopping and mixing machine, such as a bowl chopper or emulsifying apparatus. The SCT may be already grinded or comminuted prior to processing in the chopping and mixing machine. Within the chopping and mixing machine, the heat-treated skin connective tissue material can be combined with a quantity of oil. According to this preferred embodiment of the invention, the SCT or SCT-oil composition is defined as "heat treated".

The heat-treated SCT material, as used herein, derives preferably from a thermal treatment or heat treatment step to which the skin pieces are subjected. Preferably, the animal skin or skin pieces are not thus subjected to an alkali and/or acid and/or enzymatic pre-treatment followed by neutralization (where appropriate), as typically employed in the industrial production of gelatine. Commercially available gelatine type A typically derives from acid processed materials, primarily pork skin; and commercially available gelatine type B typically derives from alkaline or lime processed materials. Preferably, according to the invention, the commercially available gelatine, gelatine type A or gelatine type B, or a mixture thereof is not used for the making of the oil composition.

The SCT-material, as used in the present invention, can also contain heat treatment products of non-collagenous skin matrix components (e.g. elastin, fibrillin). In contrast, the edible gelatine industrially commonly produced, it is derived from collagen.

For the making of the non-heat treated SCT-oil composition, the procedure comprises mixing of processed (e.g. comminuted) non-heat treated SCT material in the presence of a water-based liquid medium (e.g. water or ice-water) with a quantity of oil and, optionally at least one additional ingredient from the list disclosed below, preferably in a suitable mixing and chopping apparatus. The use of secondary ingredients (e.g. salts, stabilisers), as listed below, is optional. Processing within the above apparatus continues, until a homogenous distribution of the individual ingredients is obtained or preferably a homogenous mixture is obtained. The obtained oil composition is characterised by an exceptionally good stability of oil incorporation. Moreover, the obtained oil compositions may have a varying viscosity, thus leading to compositions ranging from liquid (e.g. liquid phase) to solid (e.g. settable gel), preferably from liquid to semi-solid, subject to parameters, such as: i) the type and added amounts of the skin connective tissue material, ii) the type and added amounts of the additional ingredient, iii) the type and amount of the secondary ingredients, if used. For example, in the absence of additional and secondary ingredients, added amounts of porcine non-heat treated SCT in the range of 0.1-30% (w/w) result in a liquid of low viscosity to medium viscosity, while added amounts of > 45% (w/w) lead to a highly viscous liquid, resembling a cream.

The resulting non-heat treated SCT-oil composition constitutes a stand-alone intermediate product, which may further be used during the preparation of a meat paste or a meat mass, suited for the making of meat-based products, such as products made of finely comminuted meat (such as frankfurter-type sausages, parizers, mortadella-type, etc), products based on coarsely comminuted meat, for example fresh (raw) sausages (such as country fresh sausages), fermented dry or semi-dry sausages (such as pepperoni salamis), products based on minced-meat (such as burgers, meat balls) or other products (such as spreadable products). The SCT-oil composition may be used immediately or after storage e.g. by chilling or freezing the mixture.

For the making of the heat treated SCT-oil composition, the procedure comprises a first step of thermal processing, to which the SCT material is subjected. The thermal processing step is a moist heat treatment, such as by steaming or by boiling. Steaming is preferably carried out in a hot-air steamer, by moisture heat vapour of about 100 °C hot steam (temperature values based on standard atmospheric pressure). In boiling, the SCT material is immersed in water or a water-based liquid solution, e.g. broth, of high temperature, e.g. 60-110°C (temperature values based on standard atmospheric pressure), for an appropriate time, preferably for 1-10 hours, optionally in the presence of suitable auxiliary ingredients, such as NaCl. Preferably boiling involves a temperature of 80-100 °C, e.g. for 2 to 5 hours. Following this, the heat treated SCT material is allowed to cool at or below 70°C, preferably at or below 65°C, more preferably at a temperature at or below 50 °C, and even more preferably at a temperature at or below 40 °C. In order to prepare the SCT-based oil composition, the heat treated SCT material is mixed, in the presence of a water-based liquid medium, e.g. water, with a quantity of oil and optionally an additional ingredient or a mixture thereof, from the list disclosed below, in an appropriate machine for mixing or mixing and chopping, for example within the bowl of a bowl chopper or kutter. The use of secondary ingredients, e.g. salts, stabilisers, as listed below, is optional. Processing continues, in the above mixing or mixing and chopping machine, until a homogenous distribution of the individual ingredients is obtained or preferably a homogenous mixture is obtained. The obtained oil composition is characterised by an exceptionally good stability of oil incorporation. Moreover, the obtained oil composition may have a varying viscosity, leading to compositions which may be between liquid (e.g. liquid phase) to solid (e.g. settable gel), subject to parameters, such as: i) the type and added amounts of the skin connective tissue material, ii) the type of the water-based medium, iii) the type and added amounts of the optionally added additional and/or secondary ingredients, if used. If thermal treatment of the SCT material comprises boiling, it is possible to use the water-based solution, containing the SCT extracts, as the water-based medium for preparing the oil composition, which can be considered as a broth. It is further possible to use as water-based medium another type of broth. As an example, a SCT-oil composition comprising about 5% (w/w) of thermally processed porcine SCT material, 45% (w/w) of oil and 50% (w/w) of the water-based solution containing the skin connective tissue extracts, normally acquires a solid gel texture, upon cooling to 20°C or below. As a further example, a SCT-oil composition comprising about 1.5% (w/w) of thermally processed skin connective tissue material, 54.5% (w/w) of oil and 44% (w/w) of water, acquires a viscous liquid consistency.

The resulting heat-treated SCT-oil composition constitutes a stand-alone intermediate product, which may further be used during the preparation of a meat paste or a meat mass, suited for the making of meat-based products, such as products made of finely comminuted meat (such as frankfurter-type sausages, parizers, mortadella-type, etc), products based on coarsely comminuted meat, for example fresh (raw) sausages (such as country fresh sausages), fermented dry or semi-dry sausages (such as pepperoni salamis), products based on minced-meat (such as burgers, meat balls) or other products (such as spreadable products). The SCT-oil composition may be used immediately or after storage e.g. by chilling or freezing the mixture.

The term "additional ingredients", as used in the present invention, comprises any ingredient from the list consisting of proteinaceous materials and/or carbohydrates.

According to the present invention, the proteinaceous material is preferably selected from the list of proteinaceous materials of animal and/or plant origin. In particular, the proteinaceous material is meat. According to the present invention, the proteinaceous material is preferably meat. Within the context of the present invention, the term "meat" comprises any kind of meat or fish commonly used for food preparations such as meat-based products. Preferably, the term "meat" encompasses any kind of beef meat, pork meat, poultry meat, such as chicken meat, turkey meat, canard meat or goose meat, veal meat, game meat or fish meat, such as shellfish meat, haddock meat, salmon meat, cod meat and tuna meat. Moreover, it is preferred that the meat used according to the method of the invention is lean meat, i.e. meat having a fat content of up to 10% (w/w), preferably of up to 8% (w/w), more preferably of up to 5 % (w/w) and most preferably of up to 3% (w/w). The carbohydrates are selected from the group consisting of monosaccharides (e.g. dextrose, fructose, glucose), oligosaccharides (e.g. lactose, maltose, and sucrose), or carbohydrates of higher molecular weight (e.g. maltodextrins), or mixtures thereof.

The heat treated or non-heat treated SCT-oil composition may further contain a secondary ingredient, preferably in the ranges recommended from supplier specifications or according to taste preferences, based on the intended meat-based product and which are usually in the range of 0.01% (w/w) to 10% (w/w) in the SCT-oil composition (calculation basis). The secondary ingredient is selected from the group consisting of salts, in particular NaCl; vegetables; antioxidants; stabilizers, e.g. phosphate salts; preservatives; flavor enhancers; acidifiers; thickening agents, e.g. starch, dietary fibers; colouring agents; emulsifying agents, e.g. milk proteins, plasma proteins, soy proteins, cereal proteins, pea protein, sesame protein; processing aids; seasonings; spices; and mixtures thereof.

The term "broth", as used according to the present invention, encompasses any broth fit for human consumption, deriving from the boiling of carcass items (e.g. bones, connective tissue) of meat-supplying animals. Some of the many different kinds of broths that may be used include: beef broth, pork broth, veal broth, lamb broth, poultry broth (e.g. chicken broth, canard broth), vegetable broth and mixtures thereof. According to a preferred embodiment of the present invention, the broth has a reduced fat content. In particular, the fat content of the broth is preferably equal to or less than 5% (w/w), more preferably equal to or less than 3% (w/w), even more preferably equal to or less than 2% (w/w) and most preferably equal to or less than 1% (w/w). Spray-dried broth of condensed liquid broth may also used, after dissolving in a liquid medium or water.

According to an aspect of this invention, the SCT-oil composition preferably has a liquid or a semi-solid consistency, that facilitates its homogenous incorporation into the meat paste/meat mass, intended for the making of cooked meat emulsion-based products of a single phase (such as frankfurters). According to another aspect of the invention, the SCT-oil composition is used to incorporate an edible oil within a range of meat preparations, wherein the SCT-oil composition is, preferably, of a solid consistency (e.g. settable gel), in order to resemble the appearance of solid animal fat (e.g. lard). According to that aspect, the oil composition has an animal fat-mimicking effect. This is particularly desirable in cases, where visible fat particles are typical of the product's appearance, for example in the case of semi-dry salamis and cooked products of Mortadella-type, etc.

In a preferred embodiment, the SCT-oil composition contains o.1 to 85% (w/w) of skin connective tissue, 0.1 to 70% (w/w) of oil, and 5 to 70% (w/w) of water, based on 100% (w/w) of the composition.

According to a first aspect of the present invention, the SCT-oil composition is prepared by a process comprising the following steps:
(1) Providing oil;
(2) Providing heat treated skin connective tissue (SCT) material;
(3) Providing a water-based liquid medium; and
(4) Bringing together (1), (2) and (3).

For step (1), suitable oils are described above under the term "oil". Preferably, the oil is olive oil.

In step (2), heat treated skin connective tissue material is provided, which can be prepared as described above. Preferably, the thermal processing involves boiling SCT material, by immersing it in water or in a water-based solution, e.g. broth. In particular, boiling is carried out by immersing SCT material in water or water-based solution of a temperature of 60°C-110°C for preferably 1-10 hours. The precise time and temperature conditions to be selected, depend on the size and thickness of the SCT pieces, the type of SCT and the initial temperature of SCT pieces, prior to thermal processing (e.g. being chilled or frozen). The SCT used preferably contains less than 20% (w/w) fat, more preferably less than 15% (w/w) fat.

The water-based liquid medium of step (3) may be water and/or another water-based solution. Preferably, the liquid medium of step (3) is partly or totally replaced by the water-based solution or water, used for the boiling of the SCT, as it contains SCT extracts and it can be considered as broth. In another preferred embodiment of the present invention, the liquid medium of step (3) is another type of broth. Suitable broths are described above under the term "broth". The preferred range of temperatures for the liquid medium of (3) is between 65-0°C, more preferably between 65-10°C, even more preferably between 65-20°C and most preferably between 65-25°C.

Step (4) comprises combining (1), (2) and (3), and can include further processing, e.g. mixing or chopping and mixing until a mixture is formed to obtain the heat treated SCT-oil composition. Step (4) is preferably carried out in a mixing machine or in mixing and chopping machine, such as a bowl chopper (Kutter or cutter), or emulsifying apparatus. The process of step (4) is preferably carried out in a range between 0°C-65°C, preferably between 10-65°C, more preferably between 20-65°C and most preferably between 25-65°C. Preferably, the ratio of heat-treated SCT: oil: water-based medium, employed for making the oil composition (=100%) is in the following ranges 0.1-55: 0.1-70: 5-70% (w/w), preferably 0.1-45: o.1-65: 5-65% (w/w), more preferably 0.1-40: 0.1-60: 5-60% (w/w). Textural characteristics, such as hardness and chewiness, can be modified upon adjusting the SCT content of the oil composition or/and the percentage of water replacement by the water-based solution, wherein the boiling of the SCT was carried out.

According to an aspect of the invention, the heat treated SCT-oil composition may further contain at least one additional ingredient. The term "additional ingredients", as used in this context, comprises any ingredient from the list of proteinaceous materials and/or carbohydrates. According to the present invention, the proteinaceous material is preferably selected from the list of proteinaceous materials of animal and/or plant origin. In particular, the proteinaceous material is meat and more preferably lean meat (<5% w/w fat). An amount of meat of up to 40% (w/w) may be incorporated in such a manner. An exemplary components' ratio in a SCT-based oil composition, comprising heat-treated SCT, oil, water and meat is 0.1-55: 0.1-70: 5-70: 0.1-40% (w/w), preferably 0.1-45: 0.1-65: 5-65: 0.1-30% (w/w) and more preferably 0.1-40: 0.1-60: 5-60: 0.1-20% (w/w). The proteinaceous material is preferably incorporated during step (4) or at the end of step (4) by further mixing, or mixing and chopping. According to the method of the present invention, the carbohydrates are selected from the group, consisting from simple sugars (e.g. dextrose, fructose, glucose), oligosaccharides (e.g. lactose, maltose, and sucrose) and carbohydrates of higher molecular weight (e.g. maltodextrin) and mixtures thereof. A suitable amount of carbohydrates is preferably between 0.1-15% (w/w) in the oil composition. An exemplary components' ratio of the SCT-based oil composition, consisting of heat-treated SCT, oil, water and carbohydrates is 0.1-55: 0.1-70: 5-70: 0.1-15% (w/w), preferably 0.1-45: 0.1-65: 5-65: 0.1-10% (w/w), more preferably 0.1-40: 0.1-60: 5-60: 0.1-8% (w/w).

The carbohydrates or mixtures thereof are preferably added during step (4) or following step (4) with further mixing.

The heat treated SCT-oil composition may further comprise a secondary ingredient. Preferably, the secondary ingredient is selected from the group consisting of salts, in particular NaCl; vegetables; antioxidants; stabilizers, e.g. phosphate salts; preservatives; flavor enhancers; acidifiers; thickening agents; coloring agents; emulsifying agents, e.g. milk proteins, plasma proteins, soy proteins, cereal proteins, pea protein, sesame protein; processing aids; seasonings; spices; and mixtures thereof. The secondary ingredient may be added in any of steps (1) to (4).

The SCT-oil composition, comprising heat-treated SCT may be used immediately after production or stored in chilling/freezing conditions, until use. The oil composition, in case that a settable gel consistency is obtained, may provide an animal fat-mimicking effect in case of preparations, wherein visible fat particles are desired. The SCT-oil composition may be thus used in partial or even total replacement of the animal fat, conventionally added in the certain types of products, such as semi-dry sausages and Mortadella.

According to the method of the present invention, the heat treated SCT-oil composition may be further used during the preparation of a meat paste or a meat mass, suited for the making of meat-based products, such as products made of finely comminuted meat (such as frankfurter-type sausages, parizers, mortadella-type, etc), products based on coarsely comminuted meat, for example fresh (raw) sausages (such as country fresh sausages), fermented dry or semi-dry sausages (such as pepperoni salamis), products based on minced-meat (such as burgers, meat balls) or other products (such as spreadable products).

In a preferred embodiment of the invention, the heat treated SCT-oil composition is intended for the preparation cooked sausages and comprises the steps of:
(a) Providing a, preferably finely or coarsely comminuted, meat paste or meat mass comprising lean meat and at least one auxiliary ingredient;
(b) Providing an oil composition comprising heat-treated SCT material and optionally additional and/or secondary ingredients, prepared according to the present invention;
(c) Bringing together the oil composition of step (b) with meat paste or meat mass of step (a), optionally auxiliary ingredients and optionally animal fat;
(d) Encasing the resulting mixture of step (c) in stuffing materials or in canning materials;
(e) Subjecting the stuffed or canned products from step (d) to a heat treatment.

In step (a), a finely or coarsely comminuted meat paste or meat mass is prepared using preferably lean meat. The term "lean meat", used in this context, refers to meat having a fat content of up to 10% (w/w), preferably of up to 8% (w/w), more preferably of up to 5% (w/w) and most preferably of up to 3% (w/w). The term "auxiliary ingredients", as used in this context, comprises any ingredient conventionally used for the production of cooked sausages, such as salts, in particular NaCl and/or substitutes thereof and nitrite salts, antioxidants, stabilizers, preservatives, flavor enhancers, acidifiers, thickening agents, colouring agents, emulsifying agents, processing aids, sugars, seasonings, spices, nuts and mixtures thereof. The auxiliary ingredients added during step (a) and (c) are typically in the range of 0.01% (w/w) to 10% (w/w) of the final product (calculation basis).

Step (a) is conducted according to conventional procedures known in the art for the preparation of finely or coarsely comminuted meat paste/meat mass, which are suited for the making of cooked sausages. An exemplary method for the preparation of a finely or coarsely comminuted meat paste/ meat mass is the following: Lean meat without visible fat is comminuted in the presence of table salt (NaCl) and nitrite salts inside the bowl of a cutter with water/ice. Optionally, this step may also involve the direct addition of vegetable oil, followed by further mixing, until oil is fully incorporated. The mixing continues up to the full homogenization of the mixture, by gradually increasing the cutting speed until the desired chopping effect is achieved. The use of a phosphate salt mixture, e.g. diphosphates, triphosphates, tripolyphosphates and/or polyphosphates, etc., or other processing aids also included within the term "auxiliary ingredients, is possible but not compulsory.

The oil composition of step (b) can be prepared as described above. An exemplary procedure for step (b) resulting in a heat treated SCT-oil composition is the following: SCT of temperature 4°C (5% w/w fat) is immersed in continuously boiling water, in a ratio (w/w) from 1.5 parts of water: 1 part of SCT, to 4 parts of water: 1 parts of SCT. It is preferred that the boiling of the SCT is carried out at a temperature of from 80 to 100 °C for approximately 2 to 5 hours, depending on the size and type of SCT material. Following the thermal processing step, the SCT material and the water used for the boiling, containing the SCT extracts therein, are left to cool up to or below 65°C, preferably between 65-20°C and most preferably between 65-25°C. The SCT may be comminuted/grinded prior to the thermal processing step or prior to the preparation of the oil composition. However, grinding/comminution of the heat-treated SCT pieces may be also carried out during the making of the SCT-based oil composition, if a bowl chopper is used. Inside the bowl of a chopper the heat-treated SCT material, the quantity of oil and the water-based medium are chopped and mixed. An exemplary ratio of SCT: oil: water-based solution in the oil composition (=100%), is as follows: 0.1-55: 0.1-70: 5-70% (w/w), preferably 0.1:45: 0.1-65: 5-65% (w/w), more preferably 0.1-40: 0.1-60: 5-60% (w/w). The oil composition is then left to cool at or below 10°C, prior to proceeding to step (c).

The heat-treated SCT oil composition of step (b) may further comprise at least one additional ingredient selected from the list of proteinaceous materials and/or carbohydrates. According to the present invention, the proteinaceous material is preferably meat and more preferably lean meat (<5% w/w fat). An amount of meat of up to 40% may be incorporated in such a manner. An exemplary components' ratio in a SCT-based oil composition, comprising heat-treated SCT, oil, water and meat is 0.1-55: 0.1-70: 5-70: 0.1-40% (w/w), preferably 0.1-45: 0.1-65: 5-65: 0.1-30% (w/w) and more preferably 0.1-40: 0.1-60: 5-60: 0.1-20% (w/w). Moreover, according to the method of the present invention, the carbohydrates are selected from simple sugars (e.g. dextrose, fructose, glucose), oligosaccharides (e.g. lactose, maltose, and sucrose) and carbohydrates of higher molecular weight (e.g. maltodextrin), or mixtures thereof. A suitable amount of carbohydrates is preferably between 0.1-15% (w/w) in the oil composition. An exemplary components' ratio of the SCT-based oil composition, consisting of heat-treated SCT, oil, water and carbohydrates is 0.1-55: 0.1-70: 5-70: 0.1-15% (w/w), preferably 0.1-45: 0.1-65: 5-65: 0.1-10% (w/w), more preferably 0.1-40: 0.1-60: 5-60: 0.1-8% (w/w).

The heat-treated SCT oil composition may further comprise a secondary ingredient or mixtures thereof. Preferably, the secondary ingredient is selected from the group consisting of salts, in particular NaCl; vegetables; antioxidants; stabilizers, e.g. phosphate salts; preservatives; flavor enhancers; acidifiers; thickening agents; coloring agents; emulsifying agents, e.g. milk proteins, plasma proteins, soy proteins, cereal proteins, pea protein, sesame protein; processing aids; seasonings; spices; and mixtures thereof.

Step (c) is preferably conducted within a bowl chopper or mixer, according to conventional procedures known in the art for the preparation of cooked meat-based products. The oil composition of step (b) and the comminuted meat preparation of step (a) are mixed and chopped together during step (c), until the desired chopping or mixing effect is obtained. Auxiliary ingredients, from the list as above, may also be added, if desired. It is preferred that the temperature in step (c) does not exceed 25 °C, more preferably 12 °C and most preferably 8 °C.

Then, in step (d) the resulting meat-based preparation, having dispersed therein the oil composition is filled in natural or artificial stuffing materials or in canning materials and is subjected to a heat treatment in step (e). Steps (d) to (e) are conducted according to conventional procedures known in the art for the preparation of cooked sausages.

According to another aspect of the present invention, the SCT-oil composition is prepared by a process comprising the following steps:
(1) Providing oil;
(2) Providing non-heat treated skin connective tissue (SCT) material;
(3) Providing a water-based liquid medium; and
(4) Bringing together (1), (2) and (3).

For step (1), suitable oils are described above under the term "oil". Preferably, the oil is olive oil.

Step (2) provides non-heat treated SCT material which can be prepared as described above.

The water-based liquid medium of step (3) may be water and/or ice water and/or another water-based solution. According to a further aspect of the present invention, the water-based liquid medium of step (3) is a broth as described above for the first embodiment. The preferred range of temperatures for the water-based liquid medium of step (3), used for the preparation of the non-heat treated SCT-oil composition is between (0-25°C).

Step (4) comprises combining (1), (2) and (3), and can include further processing, e.g. chopping or mixing and chopping, until a mixture is formed, to obtain the non-heat treated SCT-oil composition. Step (4) is preferably carried out in a mixing apparatus or in a mixing and chopping apparatus, such as a bowl chopper (cutter), or emulsifying apparatus. The process of step (4) is preferably carried out in a range between o-25°C and more preferably between 0-15°C. Preferably, the ratio of SCT: oil: water-based liquid medium used for making the non-heat treated SCT oil composition (=100%) is in the following range: 0.1-85: 0.1-70: 5-70% (w/w), preferably 0.1-75: 0.1-65: 5-65% (w/w) and more preferably 0.1-65: 0.1-60: 5-60% (w/w).

According to another aspect of the invention, the non-heat treated SCT-oil composition may contain at least one additional ingredient. The term "additional ingredients", as used in this context, comprises any ingredient selected proteinaceous materials and/or carbohydrates. According to the present invention, the proteinaceous material is preferably selected from the list of proteinaceous materials of animal and/or plant origin. In particular, the proteinaceous material is preferably meat and more preferably lean meat (<5% fat). An amount of meat of up to 40% may be incorporated in such a manner. An exemplary components' ratio in a SCT-based oil composition, comprising SCT, oil, water and meat is 0.1-85: 0.1-70: 5-70: 0.1-40% (w/w), preferably 0.1-75: 0.1-65: 5-65: 0.1-30% (w/w), and more preferably 0.1-65: 0.1-60: 5-60: 0.1-20% (w/w). According to the method of the present invention, the carbohydrates are selected from simple sugars (e.g. dextrose, fructose, glucose), oligosaccharides (e.g. lactose, maltose, and sucrose) and carbohydrates of higher molecular weight (e.g. maltodextrin), or mixtures thereof. A suitable amount of carbohydrates is between 0.1-15% (w/w). An exemplary components' ratio of the SCT-based oil composition comprising non-heat treated SCT, oil, water and carbohydrates is 0.1-85: 0.1-70: 5-70: 0.1-15% (w/w), preferably 0.1-75: 0.1-65: 5-65: 0.1-10% (w/w), and more preferably 0.1-65: 0.1-60: 5-60: 0.1-8% (w/w). The additional ingredient or the mixtures thereof, may be added during step (4) or following step (4) with further mixing or mixing and chopping.

The non-heat treated SCT-oil composition may further comprise a secondary ingredient. Preferably, the secondary ingredient is selected from the group consisting of salts, in particular NaCl; vegetables; antioxidants; stabilizers; preservatives; flavor enhancers; acidifiers; thickening agents; coloring agents; emulsifying agents e.g. milk proteins, plasma proteins, soy proteins, cereal proteins, pea protein, sesame protein; processing aids; seasonings; spices; and mixtures thereof. The secondary ingredients are typically in the range of 0.01% to 10% (w/w) of the SCT-oil composition (calculation basis). The secondary ingredient may be added in any of steps (1) to (4).

The SCT-oil composition comprising non-heat treated SCT may be used immediately after production or stored in chilling/freezing conditions, until use. The non-heat treated SCT-composition has a varying viscosity, leading to compositions ranging from liquid (e.g. liquid phase) to solid (e.g. settable gel), more preferably from liquid to semi-solid. Preferably, the non-heat treated SCT-oil composition has a viscous liquid consistency.

According to the present invention, the non-heat treated SCT-oil composition may be further used during the preparation of a meat paste or a meat mass, suited for the making of meat-based products, such as products made of finely comminuted meat (such as frankfurter-type sausages, parizers, mortadella-type, etc), products based on coarsely comminuted meat, for example fresh (raw) sausages (such as country fresh sausages), fermented dry or semi-dry sausages (such as pepperoni salamis), products based on minced-meat (such as burgers, meat balls) or other products (such as spreadable products).

In a preferred embodiment of the invention, the non-heat treated SCT-oil composition is prepared and used for the preparation of cooked sausages, comprising the steps of:
(a) Providing a, preferably finely or coarsely comminuted, meat paste or meat mass comprising lean meat and at least one auxiliary ingredient;
(b) Providing an oil composition comprising non-heat treated SCT material, at least one additional ingredient and optionally a secondary ingredient, prepared according to the present invention;
(c) Bringing together the oil composition of step (b) with the meat paste or meat mass of step (a), optionally with auxiliary ingredients and animal fat;
(d) Encasing the resulting mixture of step (c) in stuffing materials or in canning materials;
(e) Subjecting the stuffed or canned products from step (d) to a heat treatment;

In step (a), a finely or coarsely comminuted meat paste or meat mass is prepared using preferably lean meat. The term "lean meat", used in this context, refers to meat having a fat content of up to 10% (w/w), preferably of up to 8% (w/w), more preferably of up to 5% (w/w) and most preferably of up to 3% (w/w).

The term "auxiliary ingredients", as used in steps (a) and (c), comprises any ingredient conventionally used for the production of cooked sausages, such as salts, for example NaCl and/or substitutes thereof and nitrite salts, antioxidants, stabilizers, preservatives, flavor enhancers, acidifiers, thickening agents, coloring agents, emulsifying agents, processing aids, sugars, seasonings, spices, nuts and mixtures thereof. The auxiliary ingredients are typically used in the preferred range of 0.01% (w/w) to 10% (w/w) of the final product (calculation basis).

Step (a) of the above embodiment is conducted according to conventional procedures known in the art for the preparation of a finely or coarsely comminuted meat paste or meat mass, suited for the preparation of cooked sausages. An exemplary method for the preparation of a finely or coarsely comminuted meat paste or meat mass, suited for the making of a cooked sausage is the following: Lean meat without visible fat is finely or coarsely comminuted in the presence of NaCl and nitrite salts inside the bowl of a cutter with water/ice. Optionally, this step may also involve the direct addition of vegetable oil, followed by further mixing, until oil is fully incorporated. The production continues up to the full homogenization of the mixture, by gradually increasing the cutting speed until the desired chopping effect is achieved. The use of a phosphate salt mixture, e.g. diphosphates, triphosphates, tripolyphosphates and/or polyphosphates, etc., or other processing aids, also included within the term "auxiliary ingredients", is possible.

The oil composition of step (b) can be prepared as described above. An exemplary method for the preparation of a non-heat treated oil composition for step (b) is the following: SCT of temperature ≤25°C, free of visible fat is preferably comminuted/grinded, prior to the preparation of the oil composition. The SCT pieces of temperatures up to or below 25°C are brought in a bowl chopper with the water-based liquid medium and the vegetable oil. The water-based liquid medium is preferably in the temperature range between 0-25°C. An exemplary ratio of SCT: oil: water-based solution in the non-heat treated oil composition (=100%), is as follows: 0.1-85: 0.1-70: 5-70% (w/w), preferably 0.1-75: 0.1-65: 5-65% (w/w) and more preferably 0.1-65: 0.1-60: 5-60% (w/w).

According to a preferred aspect of the invention, the non-heat treated SCT-oil composition of step (b) may further contain at least one additional ingredient. The term "additional ingredients", as used in this context, comprises any ingredient from the above list of proteinaceous materials and/or carbohydrates.

According to the present invention, the proteinaceous material is preferably meat and more preferably lean meat (<5% w/w fat). An exemplary components' ratio in a SCT-based oil composition, comprising non-heat treated SCT, oil, water and meat is 0.1-85: 0.1-70: 5-70: 0.1-40% (w/w), preferably 0.1-75: 0.1-65: 5-65: 0.1-30% (w/w) and more preferably 0.1-65: 0.1-60: 5-60: 0.1-20% (w/w). According to the present invention the carbohydrates are selected from simple sugars (e.g. dextrose, fructose, glucose), oligosaccharides (e.g. lactose, maltose, and sucrose) and carbohydrates of higher molecular weight (e.g. maltodextrin), or mixtures thereof. A suitable amount of carbohydrates is between 0.1-15% (w/w). An exemplary components' ratio of the SCT-based oil composition, comprising non-heat treated SCT, oil, water and carbohydrates is 0.1-85: 0.1-70: 5-70: 0.1-15% (w/w), preferably 0.1-75: 0.1-65: 5-65: 0.1-10% (w/w) and more preferably 0.1-65: 0.1-60: 5-60: 0.1-8% (w/w). The additional ingredient may be added during step (4) or following step (4) with further mixing or mixing and chopping.

The non-heat treated SCT oil composition may further comprise an optional secondary ingredient. Preferably, the secondary ingredient is selected from the group consisting of salts, in particular NaCl, vegetables, antioxidants, stabilizers, preservatives, flavor enhancers, acidifiers, thickening agents, coloring agents, emulsifying agents, e.g. milk proteins, plasma proteins, soy proteins, cereal proteins, pea protein, sesame protein; processing aids, seasonings, spices, and mixtures thereof. The secondary ingredients are typically used in the range of 0.01% to 10% (w/w) of the SCT-oil composition (calculation basis).

Step (c) of the above-described embodiment is preferably conducted within a bowl chopper, according to conventional procedures known in the art for the preparation of cooked meat-based products. The oil composition of step (b) and the comminuted meat paste or meat mass of step (a) are mixed and chopped together during step (c), until the desired chopping or mixing effect is obtained. Other ingredients, from the list as above, may also be added at this step, if desired. It is preferred that the temperature in step (c) does not exceed 25 °C, more preferably 12 °C and most preferably 8 °C.

Then, in step (d) the resulting meat-based preparation, having dispersed therein the oil composition is filled in natural or artificial stuffing materials or in canning materials and is subjected to a heat treatment in step (e). Steps (d) to (e) are conducted according to conventional procedures known in the art for the preparation of cooked sausages. The amount of the heat-treated SCT oil composition or/and of the non heat-treated SCT oil composition, that is to be used for the preparation of the oil containing meat-based products, particularly depends on the kind of oil, the ratio of oil to SCT in the oil composition, as well as on the intended SCT and oil concentration of the end product. An exemplary amount of the oil composition for use in the making of meat-based products is between 0.1 and 85% (w/w), preferably between 1 and 70% (w/w), more preferably between 2 and 55% (w/w) and most preferably between 3 and 40% (w/w).

### Examples

**Example 1**: Preparation of an olive oil containing semi-dry sausage (semi-dry salami).

In this example a method of preparing semi-dry salami (e.g. salami of pepperoni type) is described.

For the making of the said product, a blend of frozen and fresh pork meat suitable for the production of fermented products is used along with a quantity of SCT-oil composition, which is used to replace the frozen back fat conventionally added. The product formulation is shown below:

**Table 1**

| Composition | kg |
|---|---|
| Pork meat 90/10 (frozen) | 35,0 |
| SCT-based oil composition | 30,0 |
| Pork MEAT 85/15 (fresh) | 35,0 |
| **Total** | **100** |
| **Auxiliary ingredients** | **g/kg of meat mass & SCT oil** |

| | **composition** |
|---|---|
| Curing salt (0.6‰ NO₂) | 25.0 |
| Dextrose | 4.0 |
| Seasoning | 5.0 |
| White pepper | 2.0 |
| Garlic powder | 1.0 |
| Starter Culture | 0.25 |
| Sodium Ascorbate | 0.5 |

### Preparation of the heat-treated SCT-oil composition

The SCT-oil composition contains heat treated SCT (5% w/w), extra virgin olive oil (40% w/w), the water-based solution, containing the SCT extracts (43% w/w) (water used for the heat treatment), meat (10% w/w), and sodium caseinate (2% w/w).

Pork carcass after bleeding, scalding, depilation, washing by high-pressure spraying, limbs removal at the carpus and removal of the head, it is eviscerated and split into two pieces in the length of the spinal cord. Then, the skin is excised in pieces, in a way that a high percentage of the adipose tissue is not included. The resulting skin connective tissue (SCT) is then cut in smaller pieces for easier handling and stored in chilling conditions, until further used. Then, 3.5kg of pork skin are placed in a bowl and immersed in 15kg of water (85°C) followed by transferring in a Convotherm Oven OB (85°C) for 3 hours. Then, the water and the heat treated SCT material therein are left to cool to a temperature of approximately 50°C. The heat treated SCT material (3kg) is then processed in a couter for 1 min (mixing speed: 3000-4000 rpm) and mixed with the above water (12.9 kg) (now water-based solution, due to the SCT extracts), extra virgin olive oil (12 kg), meat (90/10) (3kg) and sodium caseinate (0.6 kg), until a homogenous mixture is obtained. The total mixing and chopping time was approximately 6 minutes (mixing speed: >4000 rpm for approximately 6 min, maximum temperature: 60 °C). The resulting mixture is frozen (-18°C), until use.

### Preparation of semi dry salami:

The frozen Pork Meat 90/10 (lean:fat ratio) and the frozen SCT-oil composition are cut in a frozen meat flaker (Mugurit model 345 StarCutter) in pieces. The pork meat is then chopped in the bowl chopper with the admixture of the starter culture (LS 25 Gewürzmüller), dextrose, seasonings, spices and the ascorbate. The comminution continues for about 2 minutes at low speed (knifes at 1500 rpm). The chunks of the heat treated SCT-oil composition are then added and chopped to the desirable size (approximately at 3 mm). A quantity of pork meat 85/15 (fresh), previously grinded at 4 mm is then incorporated in the mixture and mixing is completed by the addition of the curing salt.

The mixture is stuffed in fibrous casings with a diameter of 50mm (Handtmann filling machine) and is subsequently transferred into the fermentation chamber. The conditions applied within the fermentation chamber are according to the scheme below:

**Table 2**

| **Date** | **Time** | **Temperature** | **Humidity** | **Air Circulation** |
|---|---|---|---|---|
| Ripening | ***1^{rst}. Day*** | | | |
| | 24 h | 26 °C | > 95 % R. H. | Low |
| | | till pH<5.2 | | |
| | ***2^{nd}. Day*** | | | |
| Ripening | 1 h | 38 °C | < 40 % R.H. | High |
| Ripening | 1 h | 48 °C | < 40 % R.H. | High |
| Ripening | 1/2 h | 52-55 °C (core) | < 40 % R. H. | High |
| | Keeping out of the oven for cooling down | | | |
| cooling | > 6 h | 4 °C | > 90 % R. H. | Low |
| Ripening | **Ripening room** | | | |
| | > 24h | 15-16 °C | < 78 % R. H. | Low |

**Example 2**: Preparation of an olive oil containing Frankfurter type sausage.

In this example an emulsified sausage of Frankfurter-type, is prepared according to the following recipe.

**Table 3**

| Product Formulation | % |
|---|---|
| Pork meat lean (90/10) | 40,0 |
| SCT- oil composition | 20,0 |
| PorkTrimmings 80/20 | 10,0 |
| Ice(water) | 24,0 |
| Sea salt | 1,62 |
| Nitrite salt (18% NO₂) | 0,08 |
| PyroPhosphates | 0,35 |
| Seasoning | 0,45 |
| Corn starch | 3.4 |
| Smoke Aroma | 0.05 |
| Sodium ascorbate | 0.05 |

### Preparation of the non heat-treated SCT-based oil composition

The non-heat treated SCT-based oil composition contains non-heat treated SCT (35 % w/w), extra virgin olive oil (32 % w/w), water (27 % w/w), dextrose (5% w/w) and sodium caseinate (1% w/w) and was prepared as follows: Pork carcass after bleeding, scalding, depilation, washing by high-pressure spraying, limbs removal at the carpus and removal of the head, it is eviscerated and split into two pieces in the length of the spinal cord. Then, the skin is excised in pieces, in a way that a high percentage of the adipose tissue is not included. The resulting skin connective tissue (SCT) is then cut in smaller pieces for easier handling and stored in chilling conditions, until further used. Then, SCT of pork skin of a temperature of about 4°C is processed in a mincing machine and then transferred in the bowl of a cutter, where it is mixed with water (2-6°C), olive oil, sodium caseinate and dextrose. The total mixing and chopping time was approximately 6 minutes, until a homogenous mixture is obtained (mixing speed: >4000 rpm for approximately 6 min, maximum temperature: ∼8°C). The resulting mixture is kept at ∼4°C, until use.

The Pork Meat (90/10) at a temperature of 5°C is chopped in a bowl chopper and mixed with salt, nitrites and phosphates with simultaneous addition of water until a homogenous paste is obtained. Then, the SCT composition and the pork trimmings are added and chopped to a particle size of approximately 2 mm. Seasonings, sodium ascorbate and starch are finally added and mixing is completed after their incorporation. The final temperature was about 8°C. The resulting mixture is encased in natural sheep stuffing material and is subjected to heat and smoking treatment, according to the practices known in the art. A table with the typical cooking and smoking conditions used is shown below.

**Table 4**

| Process | Humidity | Temperature | Time | Air Circulation |
|---|---|---|---|---|
| Reddening | > 90 % | 55 °C | 30 min | I |
| Drying | - | 60 °C | 10-15 min | II |
| Smoking | - | 70-75 °C | 15-20 min | II |
| Cooking | > 100 % | 78 °C, | till core >70 °C | I |
| Shower | - | - | ∼10 min | - |
| Cooling | - | <4 °C | - | - |

### Example 3: Preparation of an olive containing Mortadella type sausage.

In the following example, a Mortadella type cooked product is prepared according to the recipe of table 5.

**Table 5**

| **Product Formulation** | **%** |
|---|---|
| Pork meat lean (90/10) | 40 |
| Pork Trimmings 85/15 | 35 |
| SCT-oil composition | 25 |
| **Total** | **100** |

| **Auxiliary ingredients** | g/Kg of meat-SCT& oil composition |
|---|---|
| Sea salt | 20 |
| Nitrite salt (18% NO₂) | 0.8 |
| Dextrose | 0.5 |
| Cardamon | 0.2 |
| Nutmeg | 0.25 |
| Pistacios | 2.0 |
| PyroPhosphates | 2.0 |
| Sodium glutamate | 0.5 |
| Sodium ascorbate | 0.4 |

Preparation of the heat treated SCT-oil composition follows the method as in Example 1. The Pork Meat & Trimmings in the form of frozen blocks, pass through a series of flaker and grinders, in order to reduce particle sizes from 13mm to a finally 0.9 mm. The resulting finely-comminuted meat is mixed in a paddle mixer with the addition of salt together with the non-meat ingredients, until a homogenous mixture is obtained. The heat treated SCT-oil composition, in the form of a rigid settable gel (diced to 10X10X10 mm) is then admixed therein. The mixing continues until the desired homogenization effect of the SCT-oil composition and the meat mass has been achieved. The resulting mixture is stuffed in a fibrous casing of a diameter of 160 mm and subjected to dry heat treatment (pasteurised) according to the known techniques.

**Example 4:** Preparation of an olive oil containing burger.

In the Example below, a burger is produced with the use of a non-heat treated SCT, according to the following recipe (table 6).

**Table 6**

| **Meat block-SCT oil composition** | **%** |
|---|---|
| Beef Trimmings (80/20) | 40 |
| Pork Trimmings 85/15 | 35 |
| Water | 10 |
| SCT- oil composition | 15 |
| Total | 100 |

| **Auxiliary ingredients** | g/Kg of meat mass & SCT-oil composition |
|---|---|
| Sea salt | 12 |
| Frozen Onions | 25 |
| Black Pepper ground | 1.5 |
| Oregano | 0.5 |
| Canned Tomatoes | 15 |
| Bread rusk | 45 |

Preparation of the non-heat treated SCT-oil composition was carried out as in Example 2. The beef and pork meat in the form of blocks at -8°C are processed in a meat flaker and then minced to 4mm using an appropriate grinder (CFS AutoGrind). The minced meat is transferred to a paddle mixer and mixed in the presence of NaCl, water, spices, onions and tomatoes. Then, the SCT-oil composition is added into the above mixture, after being minced to 4mm using an appropriate grinder (CFS AutoGrind), and further mixing follows until its full incorporation in the meat preparation. The process is finished with the addition of rusk, followed by further mixing. The resulting product is formed in a forming Machine (Formax) into a 120 g burger and flashed frozen in a spiral freezer.

## Claims

1. Use of a composition comprising skin connective tissue from meat-supplying animals as carrier for the incorporation of oil into meat-based products.

2. Use according to claim 1, wherein the skin connective tissue is derived from porcine skin, skin of ruminants, poultry, fish, or combinations thereof.

3. Use according to claim 1 or 2, wherein the composition is prepared by processing carcass items or skin material of the meat-supplying animals to obtain skin connective tissue, mixing the skin connective tissue with a water-based liquid medium, the oil, and optionally at least one additional ingredient, with the proviso that the skin connective tissue has not been subjected to a thermal treatment.

4. Use according to claim 1 or 2, wherein the composition is prepared by processing carcass items or skin material of the meat-supplying animals to obtain skin connective tissue, subjecting the skin connective tissue to a thermal treatment, preferably a moist heat treatment, mixing the obtained skin connective tissue with a water-based liquid medium, the oil, and optionally at least one additionally ingredient.

5. Use according to any of the preceding claims, wherein an oil selected from olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof, in particular olive oil, is used.

6. Use according to any of the preceding claims, wherein the water-based liquid medium is selected from the group consisting of water and water-based liquid solutions, in particular water or broth.

7. Use according to claim 4, wherein the thermal treatment comprises boiling or steaming.

8. Use according to any of claims 3 to 7, wherein the at least one additional ingredient is selected from proteinaceous materials and/or carbohydrates.

9. Use according to claim 8, wherein the proteinaceous material is meat.

10. Use according to claim 8, wherein the carbohydrates are selected from monosaccharides, oligosaccharides, carbohydrates of higher molecular weight, or mixtures thereof.

11. Use according to any of the preceding claims, wherein the composition further comprises at least one secondary ingredient selected from sodium chloride, vegetables, antioxidants, stabilizers, preservatives, flavor enhancers, acidifiers, thickening agents, colouring agents, emulsifying agents, processing aids, seasonings, spices, and mixtures thereof.

12. Use according to any of the preceding claims, wherein the meat-based products are finely and/or coarsely comminuted meat-based products, in particular raw, cooked, dry, or semi-dry sausages, minced meat-based products and spreadable products.

13. Use according to any of the preceding claims, wherein the amount of composition incorporated into the meat-based product is 0.1 to 85% (w/w), based on 100% (w/w) of the meat-based product.

14. Use according to any of the preceding claims, wherein the composition contains 0.1 to 85% (w/w) of skin connective tissue, 0.1 to 70% (w/w) of oil, and 5 to 70% (w/w) of water, based on 100% (w/w) of the composition.

15. A process for preparing a meat-based product, wherein the process comprises preparing a composition comprising skin connective tissue from meat-supplying animals and oil, and adding said composition to a meat mass or meat paste to prepare the meat-based product.

16. The process of claim 15, wherein the composition is as defined in any of claims 2 to 11 or 14.

17. The process of claims 15 or 16, wherein the meat-based products are defined as in claim 12 or 13.

18. Meat-based products obtainable by the process according to any of claims 15 to 17.

19. An oil composition obtainable by combining oil with skin connective tissue from meat-supplying animals, wherein the composition is as defined in any of claims 2 to 11 or 14.
